# EUROPEAN PATENT APPLICATION

(11) **EP 1 589 780 A1**
(43) Date of publication of application: **26.10.2005**
(21) Application number: 05014319.7
(22) Date of filing: 30.03.2001
(51) Int. Cl.: H04Q 7/38

(54) **Method and apparatus for soft handoff in a communication system operating according to multiple communication standards**

(30) Priority: 07.04.2000 US 545125
(62) Divisional of application: 01926480.3
(71) Applicant: MOTOROLA, INC., Schaumburg, IL 60196 (US)
(72) Inventor: Jalloul, Louay, Palatine Illinois 60067 (US); Luz, Yuda Yehuda, Buffalo Grove Illinois 60089 (US); Rotstein, Ron, Arlington Heights Illinois 60004 (US); Tenbrook, Keith A., Cary Illinois 60013 (US); Chen, Jiangnan, Darien Illinois 60561 (US)
(74) Representative: Openshaw, Paul Malcolm

(57) **Abstract**

A soft handoff operation is provided for a first signal transmitted according to a first communication standard (IS-95B) and a second signal transmitted according to a second communication standard (IS-95C). A mobile station (MS) (204) receives the first signal, detects a pilot signal, measures pilot signal strength, and transmits a pilot strength measurement message. When the MS fails to receive a handoff direction message after transmitting the pilot strength message, the MS searches for a detecting presence of a broadcast control channel (BCCH) associated with a type IS-95C cell site (202) and measures a carrier-to-interference ratio of the BCCH. The MS compares the carrier-to-interference ratio to a threshold, and when the ratio is above the threshold, initiates a second communication according to the IS-95C standard, thus initiating a soft handoff operation and allowing cell sites (202, 203) to transmit information according to the IS-95C and IS-95B standards, respectively.

## Description

### Background of the Invention

The invention relates to the field of communications and communication systems, and more particularly, to a code division multiple access (CDMA) communication system.

Several types of commercially available CDMA communication systems operate according to one or more of multiple communication standards, such as IS-95B and IS-95C standards. Such systems evolve from one generation to another. For example, the IS-95B standard followed a previously known IS-95A standard to provide additional capacity while improving performance in many different aspects of the CDMA communication systems. Recently the IS-95C standard, otherwise known as IS3000, has been introduced to meet even a higher demand for capacity and performance. The standards describing the details of IS-95A, IS-95B, IS-95C (IS3000) systems, a copy of each may be obtained by contacting ***Telecommunications Industry Association in Washington DC, USA,*** or visiting the world wide web site at ***www.tiaonline.org,*** incorporated by reference herein.

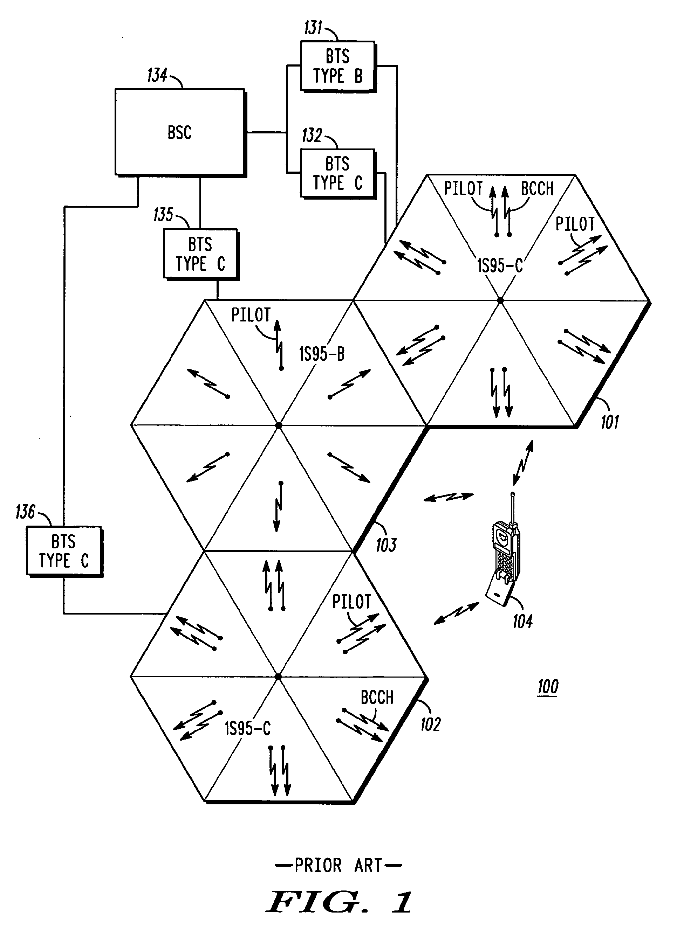

Referring to FIG. 1, a simplified block diagram of a communication system 100 with several cell sites coverage areas and certain associated building blocks is shown. Often times CDMA systems operating according to different standards are implemented in coverage areas located side by side, in proximity of each other or in an overlapping coverage area. For example, a cell site 101 having multiple sectors provides communication services according to IS-95B and IS95-C standards in an overlapping coverage area. Cell site 101 achieves multi-type services by coupling a base transceiver station (BTS) 131 of type IS-95B and BTS 132 of type IS-95C to a base station controller (BSC) 134. Since BSC 134 controls some aspects of the communication calls made via cell site 101, BSC 134 may decide which type of service, type B for IS-95B or type C for IS-95C, a mobile user may receive while it is in the coverage area. The mobile user may also select the service type. BSC 134 provides the communication services through the selected communication type by routing the information through the corresponding BTS, for example, either BTS 131 or BTS 132 if the mobile station is in the cell site 101 coverage area.

According to one example of a cell configuration as shown in communication system 100, a cell site 103 adjacent to cell site 101 may provide only communication services according to IS-95B standards. As such, a BTS 135 serving cell site 103 is of the B type and coupled to BSC 134. A cell site 102 adjacent to cell sites 103 and 101 may provide communication services according to IS-95C standards. As such a BTS 136 serving cell site 102 is of the C type and coupled to BSC 134. Other cell site configurations are also possible.

Since mobile stations are also evolving with the standards, a mobile station may operate in a single-mode or dual-mode or other multi-mode. In case of dual-mode operation, the mobile station may operate according to both IS-95B and IS-95C standards. A mobile station (MS) 104, if it is in a single-mode operation, may receive communication services from cell sites 101 and 102 through BTSs 132 and 136 or cell sites 101 and 103 through BTSs 131 and 135 depending on whether its mode of operation is IS-95C or IS-95B respectively. A dual-mode MS 104, however, may not be able to efficiently receive communication services from all three cell sites 101-103. At least to some extent, MS 104 in dual mode operation may not benefit from soft hand operation from all three cell sites.

The operation known as soft handoff commonly known to one ordinary skilled in the art allows a mobile station to receive and combine from neighboring base stations different signals to improve receiving quality. The received signals are combined in the receiver to gain improvement in reception and decoding of the transmitted information. The operations relating to the soft handoff are well known to one ordinary skilled in the art in view of the description provided in the IS-95B and IS-95C standards.

When a mobile station receives signals communicated according to a common standard, the soft-combining operation is easily performed. For example, if mobile station 104 is communicating with cell site 101 according to IS-95B standard through BTS 131 and moves to cell site 103, the soft handoff operation is easily performed because cell site 103 operates through BTS 135 which is of the B type. As such, BSC 134 may easily transmit the information to MS 104 via cell sites 101 and 103 through BTSs 131 and 135 which both are of the B type. However, if mobile station 104 is communicating with cell site 101 according to IS-95B standard and moves to cell site 102, the soft handoff operation may not be possible because cell site 102 provides only communication services through BTS 136 operating according to IS-95C standard. Moreover, when MS 104 is communicating with cell site 101 through BTS 131 operating according to IS-95B standard, soft handoff operation for signals transmitted from cell site 101 through BTS 132 operating according to IS-95C standard may not be possible or difficult. It is well understood by one ordinary skilled in the art that the terms cell site and sector are interchangeable in the way the communication services are provided.

Therefore, there is a need for a method and apparatus that facilitates soft-combining operation of received signals transmitted according to different CDMA standards.

### Brief Description of the Drawings

FIG. 1 is a block diagram of an exemplary communication system of the prior art.
FIG. 2 is a block diagram of an exemplary communication system in accordance with an embodiment of the present invention.
FIG. 3 is a block diagram of a communication receiver for detecting presence of BCCH channel in accordance with an embodiment of the present invention.
FIG. 4 is a block diagram of a receiver for receiving, combining and decoding the first and second signals communicated according to respectively the first and second communication standards in accordance with an embodiment of the present invention.
FIG. 5 is an example of a messaging system between a mobile station and cell sites of type IS-95B and C, respectively, in accordance with an embodiments of the present invention.
FIG. 6 is an example of a messaging system between a mobile station and cell sites of type IS-95B and C, respectively, in accordance with another embodiment of the present invention.

### Detailed Description of the Preferred Embodiment(s)

A communication system operating according to IS-95C standard includes a broadcast common control channel (BCCH). A mobile station operating in dual mode can detect presence of a BCCH. A mobile station capable of operating in dual-mode may substantially benefit from various aspects of the invention that allows soft combining of signals transmitted according to at least two different types of communication standards such IS-95B and IS-95C from different cell sites or sectors.

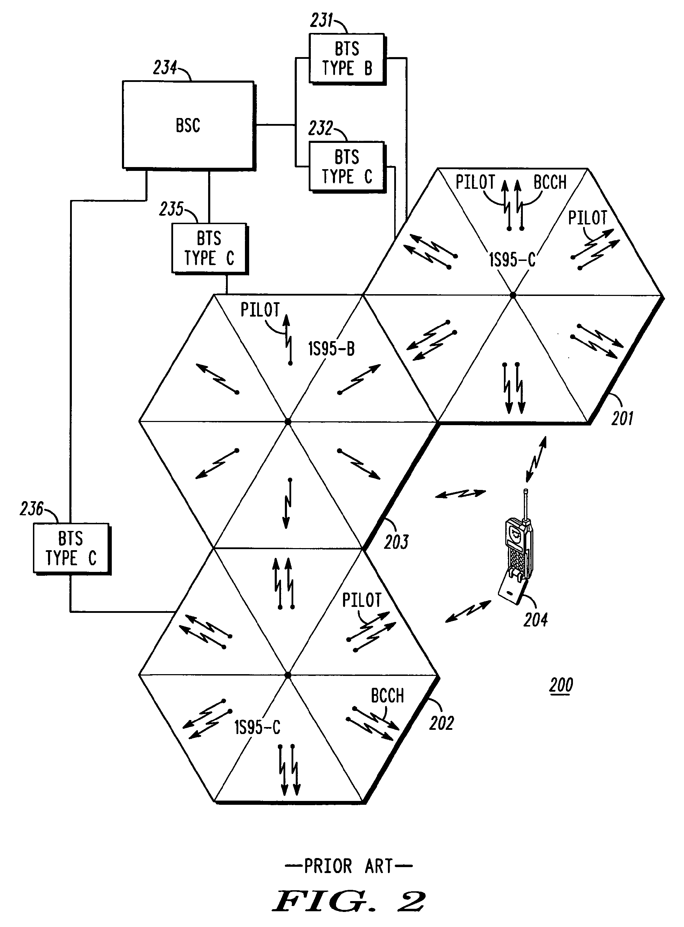

Referring to FIG. 2, an exemplary communication system 200 is illustrated in accordance with an embodiment of the present invention. Communication system 200 includes multiple cell sites 201-203 (three shown). Each cell site 201-203 is served by one or more base transceiver stations (BTSs) 231, 232, 235, and 236, (i.e., cell site 201 is served by BTSs 231 and 232, cell site 202 is served by BTS 236, and cell site 203 is served by BTS 235) and provides communications services according to one or more communication standards, such as communication standard IS-95B and communication standard IS95-C. Also, each cell site may be sectorized, that is, may be divided into multiple sectors.

As depicted in FIG. 2, cell site 201 provides communication services according to both the first and second communication standards, that is, the IS-95B and IS95-C standards, in an overlapping coverage area. Cell site 201 achieves multi-type services by coupling BTS 231, of type IS-95B, and BTS 232, of type IS-95C, to a base station controller (BSC) 234. BSC 234 controls some aspects of the communication calls made via cell site 201 and can decide which type of service, type B for IS-95B or type C for IS-95C, a mobile user may receive while the user is in a coverage area of cell site 201. The mobile user may also select the service type. BSC 234 provides the communication services through the selected communication type by routing the information through the corresponding BTS, for example, either BTS 231 or BTS 232 if the mobile station is in the cell site 201 coverage area.

Cell site 203, which is adjacent to cell site 201, provides communication services according to IS-95B standards. As a result, BTS 235, serving cell site 103, is of the B type and is coupled to BSC 134. Cell site 202, adjacent to cell sites 201 and 203, provides communication services according to IS-95C standards. As a result, BTS 236, serving cell site 102, is of the C type and is coupled to BSC 134. Other cell site configurations are also possible.

Communication system 200 further includes a mobile station (MS) 204 that may operate in a single-mode or dual-mode or other multi-mode. In case of dual-mode operation, MS 204 may operate according to both IS-95B and IS-95C standards. When MS 204 receives signals communicated according to a common standard, a soft-combining operation is easily performed. For example, if mobile station 204 is communicating with cell site 201 according to IS-95B standard through BTS 231 and moves to cell site 203, the soft handoff operation is easily performed because cell site 203 operates through BTS 235 which is of the B type. As such, BSC 234 may easily transmit the information to MS 204 via cell sites 201 and 203 through BTSs 231 and 235 which both are of the B type. However, in the prior art, when a mobile station is communicating with a first cell site according to a first communication standard, such as the IS-95B standard, and moves to a second cell site that operates according to a second communication standard, such as the IS-95C standard, then a soft handoff operation may be difficult if not impossible.

In communication system 200, a method and apparatus provide for soft handoff operation of at least a first signal transmitted according to a first communication standard, such as the IS-95B standard, and a second signal transmitted according to a second communication standard, such as the IS-95C standard. MS 204 and a cell site providing communications services to MS 204, on an initial contact, may select the first communication standard. MS 204 initially receives the first signal while in a communication link with one of cell sites 201-203 in communication system 200. Such a communication link may be, for example, with cell site 203 that provides communication services according to IS-95B standard.

Each cell site 201-203, or sector of a cell site, transmits a pilot signal encoded with a pseudo random code having a unique time offset, commonly known as PN offset. MS 204 may detect presence of a pilot signal, possibly a new pilot signal other than the one that has already been detected. As a normal part of routine operations performed by MS 204 for maintaining an adequate communication link, MS 204 measures pilot signal strength of the pilot signals received by MS 204 from each of cell sites 201-203. Based on the pilot signal strength and, possibly, other information, MS 204 may find a more appropriate cell site or sector for hand-off of the communication link. MS 204 transmits a pilot strength measurement message based on the measured pilot signal strength by using a communication channel communicated according to the first communication standard.

If the pilot signal was transmitted from a cell site of only type C, such as cell site 202, cell site 1203, which is of the B type, will not respond to the message. Such a response normally is generated from BSC 234. Since BSC 234 has no knowledge of MS 204 capability with respect to the dual-mode operation, BSC 234 would not respond to the message. As a result, MS 204, after a short period of time, fails to receive a handoff direction message after transmitting the pilot strength measurement message. Failing to receive a handoff direction message may be an indication that the pilot signal was transmitted from a cell site of type C. MS 204 searches for detecting presence of a broadcast control channel that is associated with type C cell sites.

When a broadcast control channel is detected, MS 204 measures a carrier-to-interference ratio of the broadcast control channel. In addition, MS 204 compares the carrier-to-nterference ratio to a threshold. When the carrier-to-interference ratio is above the threshold, MS 204 initiates a second communication according to the second communication standard using a reverse link common control channel communicated according to the second communication standard. MS 204 transmits the pilot strength measurement message using the reverse link common control channel. At this point, MS 204 has communication links according to both IS-95B and IS-95C in the communication system 100. BSC 234 then allows initiating a soft handoff operation by transmitting information according to the first and second communication standards respectively via the first and second signals. MS 204 combines the first and second signals to take advantage of the soft handoff operation.

In case MS 204 is detecting a pilot signal from cell site 201, the pilot strength measurement message would be responded to by BSC 234 because cell site 201 is capable of providing communication services for both B and C types, the first and second communication standards. Therefore, BSC 234 generates a handoff direction message based on the message for directing a hand-off operation. It is preferable to move communication services to the C type because it provides better performance than the B type in some instances. Additionally, in this situation, MS 204 may detect presence of a broadcast channel transmitted from cell site 201. MS 204 measures a carrier-to-interference ratio of the broadcast control channel, and compares the carrier-to-interference ratio to a threshold. When the carrier-to-interference ratio is above the threshold, MS 204 initiates a second communication according to the second communication standard, type C, using a reverse link common control channel. MS 204 transmits the pilot strength measurement message using the reverse link common control channel. BSC 234, then, initiates a soft handoff operation by transmitting information according to the first and second communication standards respectively via said first and second signals. MS 204 then combines the first and second signals. At this point, MS 204 may drop the first signal communicated according to the first communication standard, B type, and continue the communication through the second communication standards. As such, MS 204 moves from a B type communication service, to a C type communication service where it is available.

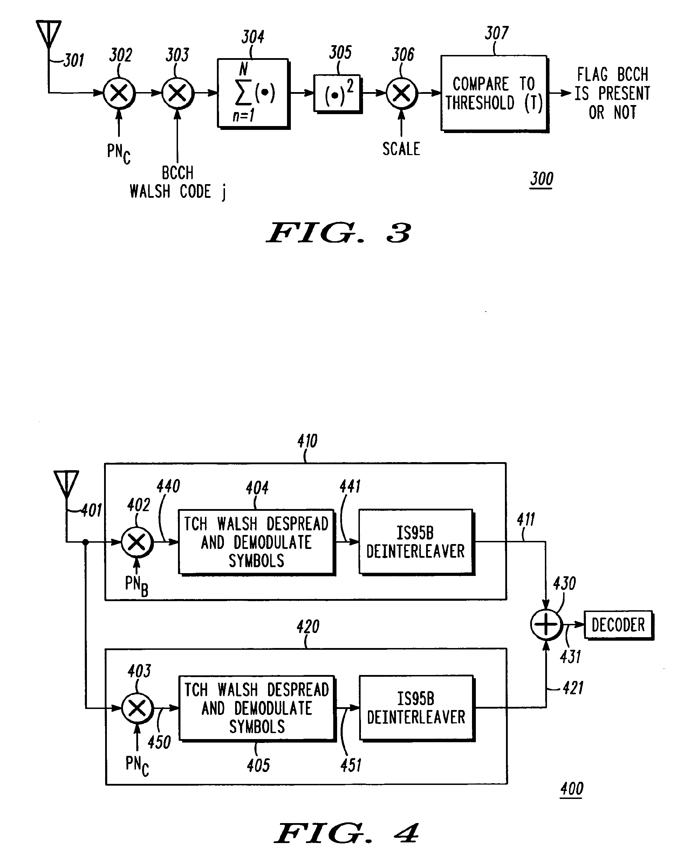

Referring to FIG. 3, a block diagram of a communication receiver 300 is shown in accordance with an embodiment of the present invention. Receiver 300 can be used for detecting presence of BCCH channel. Receiver 300 includes a receiving antenna 301 for receiving, among other signals, the second signal and the BCCH signal. The BCCH signal is fed to a despreader 302 for de-spreading the signal according to a PN sequence assigned to a C type communication. A resulting signal is fed to a despreader 303 for de-spreading function according to a Walsh Code assigned to the BCCH. A resulting signal energy is determined collectively through a summing block 304 and a squaring block 305. If there is any need for scaling the resulting metric energy, a scaling block 306 scales the matrices before being fed to a comparator 307. Comparator 307 compares the energy to a threshold to determine whether a BCCH channel is present. A BCCH channel flag may be produced indicating presence of a BCCH channel.

The threshold may be determined according to a known method. Preferably, the threshold may be determined based on a part or the total amount of transmit power allocate to the pilot signal transmitted from that cell site, a part or total amount of transmit power allocated to the BCCH and a threshold used in the soft hand-off operation in the cell site. The hand-off threshold is well known by one ordinary skilled in the art in view of the IS-95B and IS-95C standards.

Referring to FIG. 4, a block diagram 400 of a receiver is shown for receiving, combining and decoding the first and second signals communicated according to respectively the first and second communication standards. An antenna 401 receives both the first and second signals. Receiver 400 includes a first signal processing block 410 for processing the first received signal according to the first communication standard to produce a first received processed signal 411. Receiver 400 further includes a second signal processing block 420 for processing the second received signal according to the second communication standard to produce a second received processed signal 421. Signals 411 and 421 are combined in a combiner 430 to produce a combined signal 431. The first communication standard may be IS-95B standard, and the second may be IS-95C standard.

Receiver 400 further includes a decoder for decoding combined signal 431 to retrieve information communicated via the first and second signals.

First processing block 410 may include a despreader 402 despreading the first signal by multiplying the first signal with a first PN sequence compatible to the first communication standard (IS-95B) to produce a first despread signal 440. A traffic channel Walsh code despreader/ demodulator 404 despreads and demodulates signal 440 to produce a first demodulated signal 441. A deinterleaver deinterleaves first demodulated signal 441 according to a first interleaving/deinterleaving function of the first communication standard to produce first received processed signal 411.

Second processing block 420 may include a despreader 403 despreading the second signal by multiplying the second signal with a second PN sequence compatible to the second communication standard to produce a second despread signal 450. A traffic channel Walsh code despreader/demodulator 405 despreads and demodulates signal 450 to produce a second demodulated signal 451. A deinterleaver deinterleaves second demodulated signal 451 according to a second interleaving/deinterleaving function of the second communication standard to produce second received processed signal 421.

Communication data rates allowed and provided by a cell site operating according to the first communication standard may be different than the allowed data rates in the second communication standard. As such, in order to make the soft combining operation in a preferred method, the invention may include equalizing communication data rates of the first and second signals communicated according to the first and second communication standards respectively. This step may be accomplished by a messaging system communicated between MS 204 and BSC 234 through corresponding BTS units. Equalizing communication data rate may include communicating data rate of the first signal to a source of the second signal for setting data rate of the second signal equal to data rate of the first signal. Equalizing communication data rate may include adjusting data rate of the second signal to data rate of the first signal.

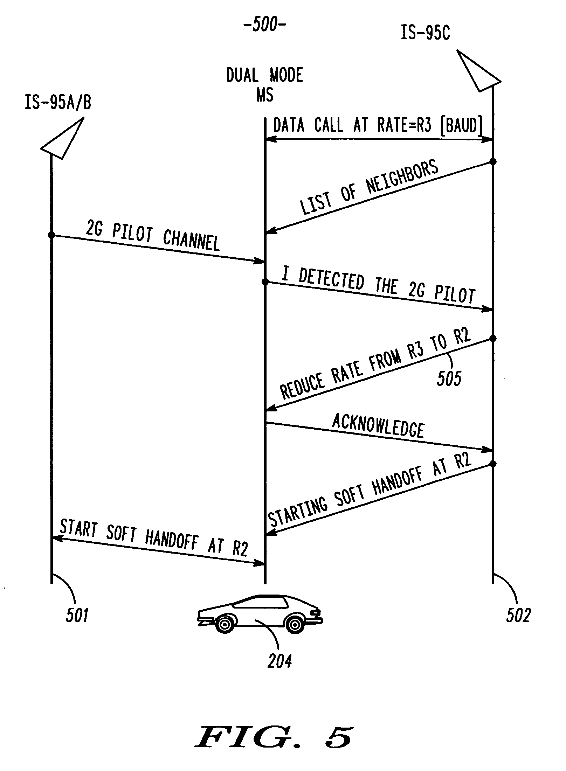

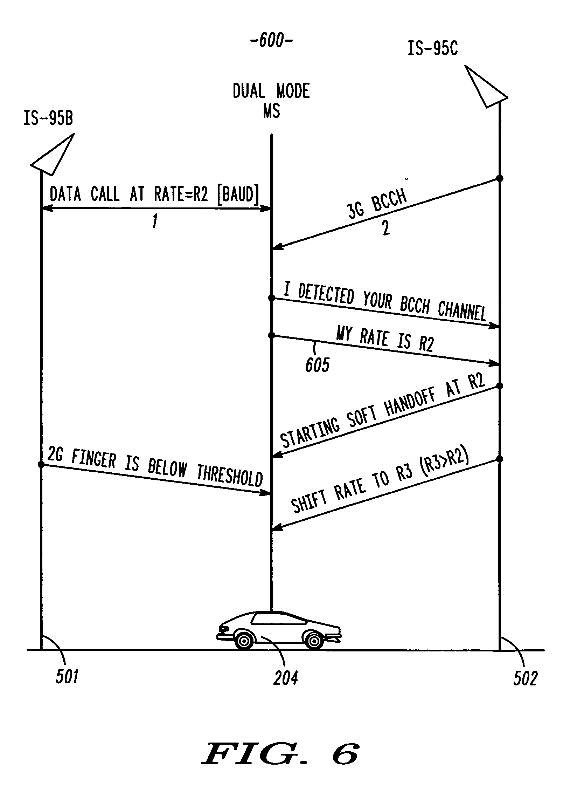

Examples of such messaging systems 500 and 600 are shown in FIGs. 5 and 6 between MS 204 and cell sites 501 and 502 of type IS-95B and C, respectively. Since the available data rates in IS-95C may be higher than the available data rates in IS-95B, messaging system 500 includes at least a step 505 for reducing the data rate. Messaging system 600 may include a step 605 that simply informs the other system of its data rate.

In sum, a method and apparatus provide for soft handoff operation of at least a first signal transmitted according to a first communication standard and a second signal transmitted according to a second communication standard. A mobile station (MS) receives the first signal, detects a pilot signal, measures pilot signal strength, and transmits a pilot strength measurement message. When the MS fails to receive a handoff direction message after transmitting the pilot strength message, the MS searches for a detecting presence of a broadcast control channel (BCCH) associated with cell sites operating on the second communication standard and measures a carrier-to-interference ratio of the BCCH. The MS compares the carrier-to-interference ratio to a threshold, and when the ratio is above the threshold, initiates a second communication according to second communication standard, thus initiating a soft handoff operation and allowing cell sites to transmit information according to the first and second standards via the first and second signals, respectively. The MS combines the first and second signals to take advantage of the soft handoff operation.

## Claims

1. An apparatus in a communication system comprising:
a first signal processing block for processing a first received signal according to a first communication standard to produce a first received processed signal;
a second signal processing block for processing a second received signal according to a second communication standard to produce a second received processed signal; and
a combiner for combining the first and second received processed signal to produce a combined signal.

2. The apparatus of claim 1 further comprising a decoder for decoding the combined signal to retrieve information communicated via the first and second signals.

3. The apparatus of claim 1 wherein said first processing block comprising:
a despreader that dispreads the first signal by multiplying the first signal with a PN sequence compatible to the first communication standard to produce a first despread signal;
a traffic channel Walsh code despreader and demodulator that produces a first demodulated signal from the first despread signal; and
a deinterleaver that deinterleaves the first demodulated signal according to an interleaving/deinterleaving function of the first communication standard to produce the first received processed signal.

4. The apparatus of claim 1 wherein said second processing block comprising:
a despreader that despreads the second signal by multiplying the second signal with a PN sequence compatible to the second communication standard to produce a second despread signal;
a traffic channel Walsh code despreader and demodulator that produces a second demodulated signal from the second despread signal; and
a deinterleaver that deinterleaves the second demodulated signal according to an interleaving/deinterleaving function of the second communication standard to produce the second received processed signal.

5. A method for soft handoff operation of at least a first signal transmitted according to a first communication standard and a second signal transmitted according to a second communication standard comprising the steps of:
processing a first received signal according to the first communication standard to produce a first received processed signal;
processing a second received signal according to the second communication standard to produce a second received processed signal; and
combining the first and second received processed signals to produce a combined signal.

6. The method of claim 5 further comprising decoding the combined signal to retrieve information communicated via the first and second signals.

7. The method of claim 5 wherein processing a first received signal comprises:
dispreading the first received signal based on a PN sequence compatible to the first communication standard to produce a first despread signal;
demodulating the first despread signal based on a Walsh Code to produce a first demodulated signal; and
deinterleaving the first demodulated signal according to an interleaving/deinterleaving function of the first communication standard to produce the first received processed signal.

8. The method of claim 5 wherein processing a first received signal comprises:
despreading the second received signal based on a PN sequence compatible to the second communication standard to produce a second despread signal;
demodulating the second despread signal based on a Walsh Code to produce a second demodulated signal; and
deinterleaving the second demodulated signal according to an interleaving/deinterleaving function of the second communication standard to produce the second received processed signal.
